# EUROPEAN PATENT SPECIFICATION

(11) **EP 1 893 895 B1**
(45) Date of publication and mention of the grant of the patent: **02.03.2011**
(21) Application number: 06747888.3
(22) Date of filing: 13.06.2006
(51) Int. Cl.: F16H 25/24

(54) **DEVICE IN CONNECTION WITH TRANSMISSION**
VORRICHTUNG IN VERBINDUNG MIT GETRIEBE
DISPOSITIF EN RELATION AVEC UNE TRANSMISSION

(30) Priority: 16.06.2005 SE 0501365
(43) Date of publication of application: 05.03.2008
(73) Proprietor: Aritco Lift AB, 196 32 Kungsängen (SE)
(72) Inventor: KARLSSON, Klas, S-191 35 Sollentuna (SE)
(74) Representative: Eriksson, Kjell
(86) International application number: PCT/SE2006/000695
(87) International publication number: WO 2006/135317

(56) References cited:
- GB-A- 952 782
- JP-A- 2002 039 316
- JP-U- 4 106 546
- US-A- 3 468 401

## Description

### Tehnical Field of the Invention

The present invention relates to a device in connection with transmission, preferably in relation with low-speed lifts, said device comprising an externally threaded rod and an internally threaded nut that is mounted on the rod, wherein there is a direct contact between the threaded rod and the nut, wherein the device has means to rotate the nut, wherein the thread of the nut has a portion of constant diameter, and wherein the portion of constant diameter has an axial extension of at least one thread revolution.

### Prior Art

It is common that so called low-speed lifts has a device in connection with transmission that comprises at least an externally threaded rod, said rod being suspended in a suitable manner at its upper end while the lower end is free. The rod is locked against rotation. A nut is mounted on the rod and adjacent to the nut there is means to rotate the nut, said means normally constituting an electric motor. When the nut rotates the nut will be displaced relative to the rod in its longitudinal direction.

The thread of the rod normally being manufactured by means of roll forming, which means that the tolerance width of the portions that form the bottom of the thread is extremely narrow. However, this is not the case as regards the portions of the rod that form the crests of the thread. The external diameter of the rod, said diameter being defined by the crests of the thread, does not define a perfect circle but notches or the like may be present along the circumference. This means that the nut "hooks on to" the external diameter of the rod and since the rod is hanging freely, i.e. there is no guiding at the area of the lower end of the rod, the rod will vibrate or even have a tendency to perform natural vibration during certain circumstances. The basic structural principle of this known device for transmission will be described below with reference to a figure.

From US-A-3 468 401 a screw -driven elevator is previously known with a screw/nut device and means to rotate the nut according to the preamble of the independent claim. However, the nut is not designed to prevent vibrations of the rod.

### Objects and Features of the Invention

A primary object of the present invention is to present a device for transmission and a nut being included in said device, the vibrations generated in said device being reduced to a substantial degree compared to prior art.

A further object of the present invention is to reduce the tendency of natural vibrations of the threaded rod and/or nut included in the device.

Still an object of the present invention is that only a part of the device according to prior art needs to be exchanged.

At least the primary object of present invention is realized by means of a device that has been given the features of the appended independent claim. Preferred embodiments of the invention are defined in the dependent claims.

### Brief Description of the Drawings

Below an example of prior art will be described as well as a preferred embodiment of the present invention, reference being made to the accompanying drawings, where:
- Figure A: shows schematically a device for transmission according to prior art;
- Figure B: shows a section along B-B in figure A, the threaded rod not being sectioned for clarity reasons;
- Figure 1: shows schematically how the device according to the present invention is integrated in a lifting device;
- Figure 2: shows a device for transmission according to the present invention;
- Figure 3: shows a section along III-III in figure 2, the threaded rod not being sectioned for clarity reasons; and
- Figure 4: shows a longitudinal section through a nut that forms a part of the device according to figure 2.

### Detailed Description of an Example of Prior Art and a Preferred Embodiment of the Present Invention

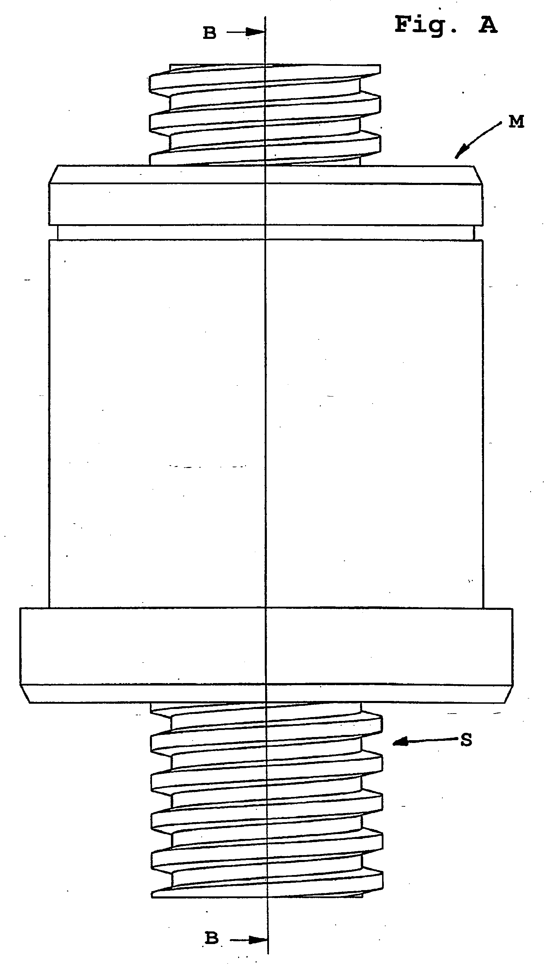

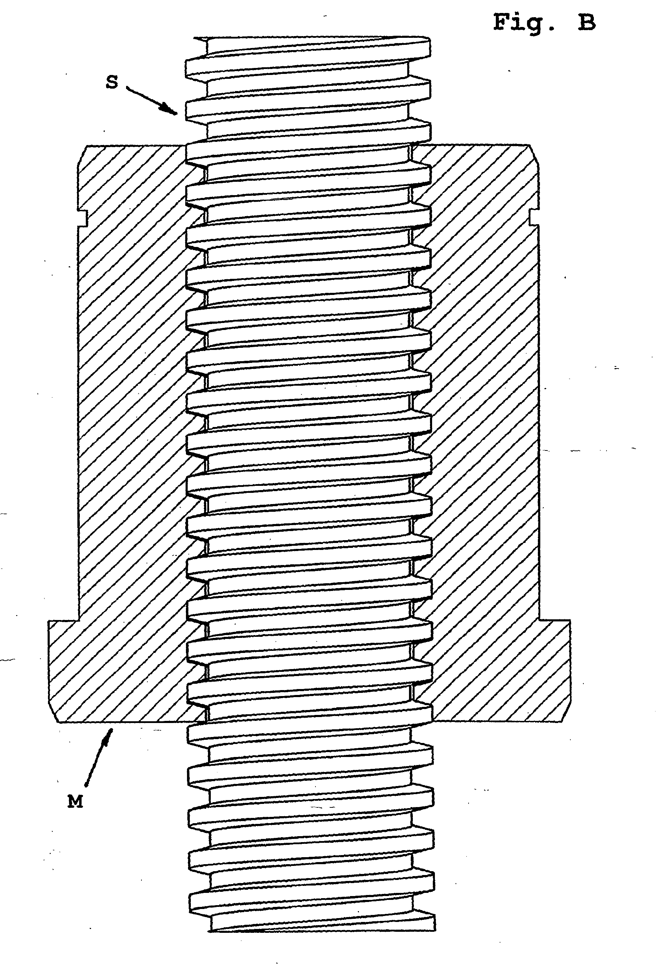

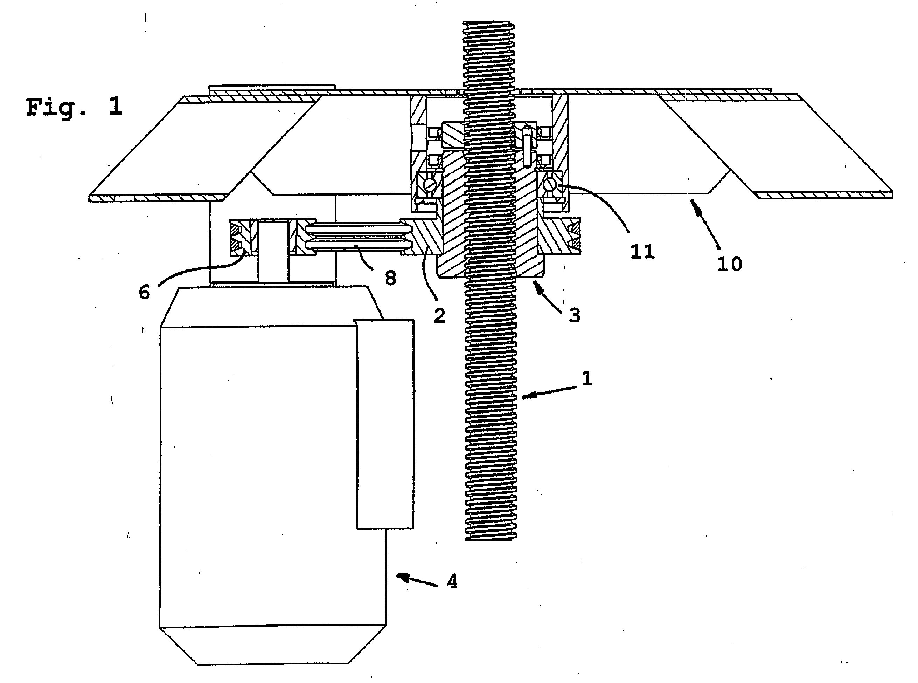

The transmission device shown in figure A according to prior art comprises an externally threaded rod S and a nut M mounted on the rod S. The transmission device functions in such a way that the nut M is rotated while the rod S is locked against rotation. The nut M may be mounted on a part of the lift cage or the platform that is given a vertical movement. The principal of this will be described more in detail below in connection with figure 1. Since the external circumference of the rod S does not define a sufficiently perfect circular cylinder vibrations will be generated when the nut M "climbs" the rod S. These vibrations are initiated when the entries of the thread, at respective ends of the nut M, contact the portions of the rod S that is bypassed during the relative movement between the nut M and the rod S. As is most evident from figure B the thread of the nut M has an essentially constant diameter along the entire extension of the nut in the longitudinal direction of the rod S. This means that when an irregularity of the external circumference of the rod S engages a thread entrance of the nut M vibrations will be initiated in the rod S, said vibrations possibly may cause the rod S and/or the nut M to perform natural vibration.

The lifting device, schematically shown in figure 1, said lifting device for instance being included in a low-speed lift, comprises an externally threaded rod 1 and a nut 3 that is mounted on the rod 1. The rod 1 is suspended in the area of its upper end (not shown) and is locked against rotation. The lower end of the rod 1 is not guided, i.e. the rod 1 hanging freely. A first pulley 2 is mounted on the nut 3. A prime mover 4, preferably an electric motor, is included in the lifting device shown in figure 1. A second pulley 6 is mounted on the output shaft of the prime mover 4. Two driving belts 8 extend around both pulleys 2, 6.

The nut 3 is rotatably suspended in a frame 10 or the like of the lifting device, the rotatable suspension being effected by means of a ball bearing 11. As is evident from figure 1 also the electric motor 4 is suspended in the frame 10.

The device, schematically shown in figure 1, functions essentially in such a way that the electric motor 4 rotates the nut 3, via the pulleys 2, 6 and the driving belts 8. This causes the nut 3 to move relative to the rod 1 since the rod 1 is locked against rotation. In the nut 3 moves upwards or downwards relative to the rod 1 depends of course from the rotary direction of the nut 3.

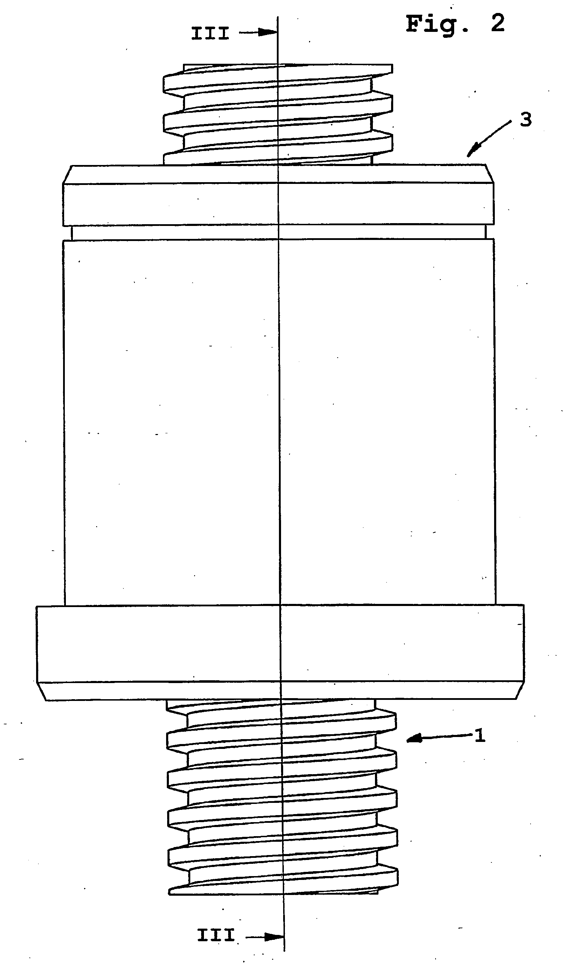

The transmission device according to the present invention, shown more in detail in figures 2-4, thus comprises an externally threaded rod 1, a nut 3 mounted on the rod 1 and means 2, 4, 6, 8 to rotate the nut 3, said means 2, 4, 6, 8 being omitted in figures 2-4. The rotational frequency range that is applicable to the nut 3, in connection with the present invention, is 200-3000 RPM.

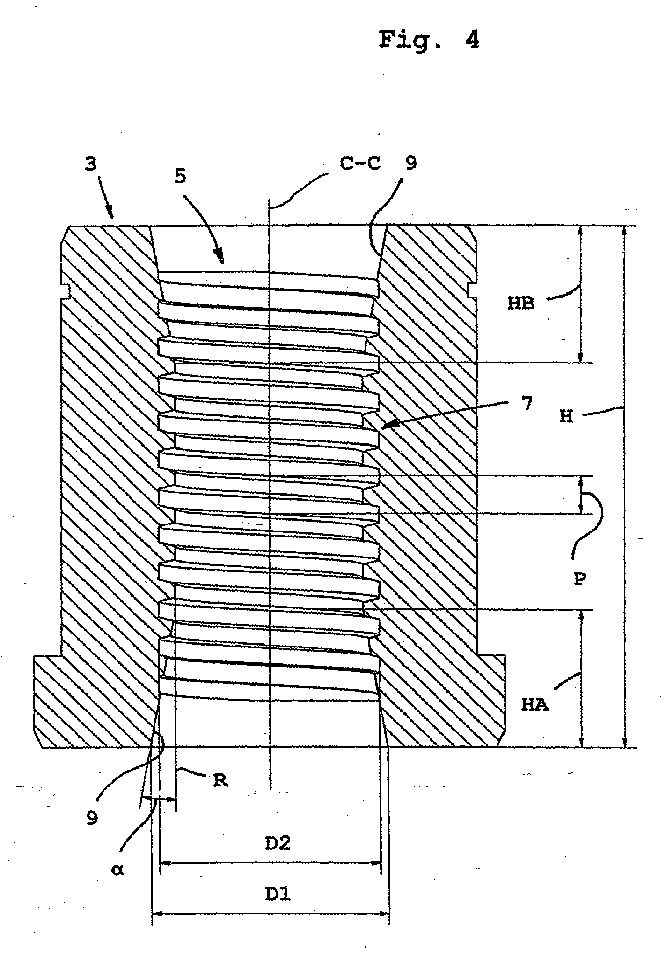

The nut 3 that is included in the device according to the present invention is shown separately in figure 4, said figure showing a longitudinal section through the nut 3. In figure 4 the centre axis C-C of the nut 3 is shown, said centre axis C-C also constituting the rotation axis of the nut 3. As is evident from figure 4 the nut 3 has a thread 5 that extends along a major portion of the height H of the nut 3, i.e. its extension along the longitudinal direction of the rod 1. In an intermediate portion 7 the thread 5 has a constant diameter while the thread 5 is equipped with bevels 9 in the area of its both entries. The bevels 9 are in the shape of conical surfaces that have symmetry of rotation in relation to the centre axis C-C. In order to define the bevels 4 a reference line R is drawn in figure 4, said reference line R being parallel to the centre axis C-C. The angle that the bevel 9 forms with the reference line R is designated by α in figure 4, the value of this angle should be in the interval 2°≤ α ≤35°, preferably said angle being in the interval 5°≤ α ≤15°.

In figure 4 the largest diameter D1 of the bevels 9 and the diameter D2 of the thread 5 are marked. The relation D1 ≥ D2 is valid between said diameters.

In figure 4 the height H of the nut 3 is marked as well as the dimensions HA and HB that define the extension of the bevels 9 in the height of the nut 3. Within the scope of the present invention it is not necessary that HA=HB, i.e. that the bevels 9 have the same height.

The height H of the nut 3 should according to the invention have a certain relation to the dimensions HA, HB and the pitch of the thread 5, said pitch being designated by P in figure 4. As regards the embodiment of the nut 3, shown in figure 4, H ≥ HA + HB + P. It is then assumed that the portion 7, having constant diameter, at least constitute one revolution of the thread, said portion 7 having an extension in axial direction that corresponds to the pitch of the thread 5. As is evident from figure 4 the portion 7 has an essentially longer axial extension. In exemplifying and non-restricting purpose it may be mentioned that the portion 7 of constant diameter has an axial extension of preferably 4-8P, with a preferred value of 6P, P being the pitch of the thread. From a functional point of view the object of the portion 7 with constant diameter is to effect a stabilisation of the nut 3 relative to the rod 1, i.e. the portion 7 with constant diameter prevents the nut 3 to wobble relative to the rod 1.

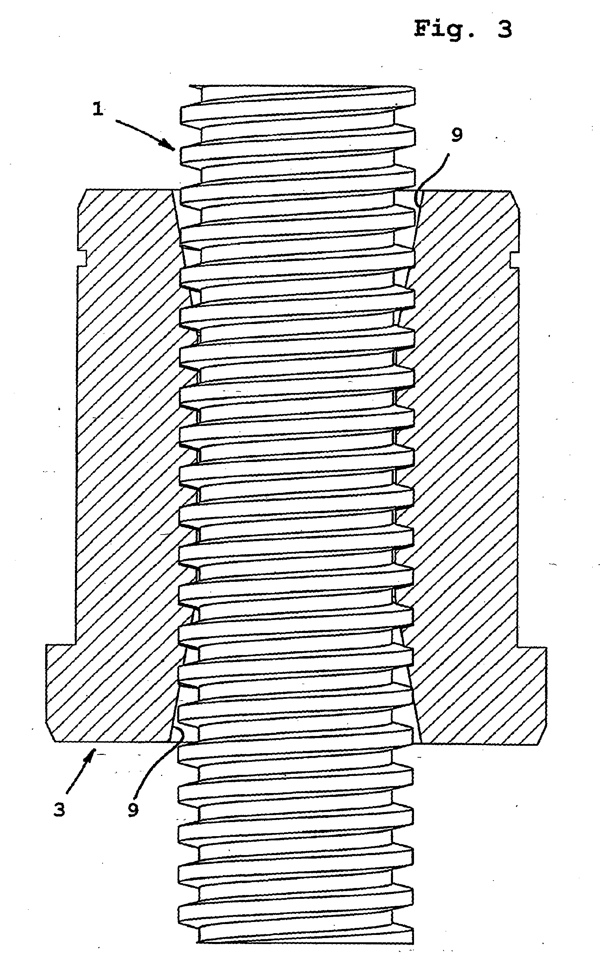

When studying figure 3 it is realized that when a certain portion of the rod 1 engages one thread entry of the nut 3, said engagement will be more gentle and initiate less vibrations, if the thread entries are located in the bevels 9.

An obvious advantage of the present invention is that in the future it will be possible to use rods 1 of the type that have been used earlier. The nut 3 according to the present invention thus compensate the lack of roundness of the rods 1.

### Feasible Modifications of the Invention

In the above described embodiment of the nut 3 bevels are provided in the area of both ends of the nut 3. Within the scope of the present invention it is however feasible that the nut has a bevel only in the area of one end. If we assume that the nut is equipped only with the upper bevel in figure 4 the following relation is valid H ≥ HA + P.

## Claims

1. Device in connection with transmission, preferably in relation with low-speed lifts, said device comprising an externally threaded rod (1) and an internally threaded nut (3) that is mounted on the rod (1), wherein there is a direct contact between the threaded rod (1) and the nut (3), wherein the device has means to rotate the nut (3), wherein the thread (5) of the nut (3) has a portion (7) of constant diameter, and wherein the portion (7) of constant diameter has an axial extension of at least one thread revolution (P),
**characterised in that** the nut (3) is equipped with a bevel (9) in the area of one thread entry.

2. Device according to claim 1, **characterised in that** the portion (7) of constant diameter has an axial extension of 4-8 thread revolutions.

3. Device according to claim 1 or 2,
**characterised in that** the nut (3) is provided with bevels (9) in the areas of its both thread entries.

4. Device according to any of the preceding claims,
**characterised in that** the bevel/the bevels (9) is/are in the shape of conical surfaces that have symmetry of rotation in relation to a centre axis (C-C) of the nut (3).

5. Device according to claim 4, **characterised in that** in an arbitrary plane that holds the centre axis (C-C) the conical surface creates an angle (α) with the centre axis (C-C), and that the angle is in the interval 2° ≤ α ≤35°, preferably in the interval 5°≤ α ≤15°.

6. Device according to claim 1, **characterised in that** the nut (3) has an extension/height H in the longitudinal direction of the rod (1), that the thread (5) of the nut (3) has a pitch P, and that the extension HA or HB of the bevel (9) in the height direction of the nut (3) is defined by the relation H ≥ HA (or HB) + P.

7. Device according to claim 3, **characterised in that** the nut (3) has an extension/height H in the longitudinal direction of the rod (1), that the thread (5) of the nut (3) has a pitch P, and that the extension HA + HB of the bevels (9) in the height direction of the nut (3) is defined by the relation H ≥ HA + HB + P.

## Patentansprüche

1. Vorrichtung in Verbindung mit einem Antrieb, vorzugsweise für Aufzüge mit geringer Geschwindigkeit, wobei die Vorrichtung eine Außengewindestange (1) und eine Innengewindemutter (3), die auf der Stange (1) befestigt ist, aufweist, wobei es einen direkten Kontakt zwischen der Gewindestange (1) und der Mutter (3) gibt, wobei die Vorrichtung ein Mittel zum Drehen der Mutter (3) aufweist, wobei das Gewinde (5) der Mutter (3) einen Abschnitt (7) mit konstantem Durchmesser aufweist und wobei der Abschnitt (7) mit konstantem Durchmesser eine axiale Ausdehnung von mindestens einer Gewindeumdrehung (P) aufweist, **dadurch gekennzeichnet, dass** die Mutter (3) mit einer Fase (9) in dem Bereich eines Gewindeeingangs versehen ist.

2. Vorrichtung nach Anspruch 1, **dadurch gekennzeichnet, dass** der Abschnitt (7) mit konstantem Durchmesser eine axiale Ausdehnung von vier bis acht Gewindeumdrehungen aufweist.

3. Vorrichtung nach Anspruch 1 oder 2, **dadurch gekennzeichnet, dass** die Mutter (3) mit Fasen (9) in den Bereichen ihrer beiden Gewindeeingänge versehen ist.

4. Vorrichtung nach einem der vorhergehenden Ansprüche, **dadurch gekennzeichnet, dass** die Fase/die Fasen (9) in der Form von konischen Oberflächen vorliegt/vorliegen, die eine Rotationssymmetrie in Bezug auf eine Mittenachse (C-C) der Mutter (3) aufweisen.

5. Vorrichtung nach Anspruch 4, **dadurch gekennzeichnet, dass** in einer beliebigen Ebene, die die Mittenachse (C-C) enthält, die konische Oberfläche einen Winkel (α) mit der Mittenachse (C-C) einschließt, und dass der Winkel in dem Bereich von 2° ≤ α ≤ 35° liegt, vorzugsweise in dem Bereich 5° ≤ α ≤ 15°.

6. Vorrichtung nach Anspruch 1, **dadurch gekennzeichnet, dass** die Mutter (3) eine Ausdehnung/Höhe H in der Längsrichtung der Stange (1) aufweist, dass das Gewinde (5) der Mutter (3) eine Steigung P aufweist und dass die Ausdehnung HA oder HB der Fase (9) in der Höhenrichtung der Mutter (3) durch die Beziehung H ≥ HA (oder HB) + P definiert ist.

7. Vorrichtung nach Anspruch 3, **dadurch gekennzeichnet, dass** die Mutter (3) eine Ausdehnung/Höhe H in der Längsrichtung der Stange (1) aufweist, dass das Gewinde (5) der Mutter (3) eine Steigung P aufweist und dass die Ausdehnung HA + HB der Fasen (9) in der Höhenrichtung der Mutter (3) durch die Beziehung H ≥ HA + HB + P definiert ist.

## Revendications

1. Dispositif en liaison avec une transmission, de préférence en relation avec les ascenseurs basse vitesse, ledit dispositif comprenant une tige filetée extérieurement (1) et un écrou fileté intérieurement (3) qui est monté sur la tige (1), dans lequel il existe un contact direct entre la tige filetée (1) et l'écrou (3), dans lequel le dispositif dispose de moyens permettant de faire tourner l'écrou (3), dans lequel le filetage (5) de l'écrou (3) a une partie (7) de diamètre constant, et dans lequel la partie (7) de diamètre constant a une extension axiale d'au moins un tour de filetage (P), **caractérisé en ce que** l'écrou (3) est muni d'un biseau (9) dans la zone d'une entrée de filetage.

2. Dispositif selon la revendication 1, **caractérisé en ce que** la partie (7) de diamètre constant a une extension axiale de 4 - 8 tours de filetage.

3. Dispositif selon la revendication 1 ou 2, **caractérisé en ce que** l'écrou (3) est muni de biseaux (9) dans les zones de ses deux entrées de filetage.

4. Dispositif selon l'une quelconque des revendications précédentes, **caractérisé en ce que** le biseau/les biseaux (9) est/sont sous la forme de surfaces coniques qui ont une symétrie de rotation par rapport à un axe central (C - C) de l'écrou (3).

5. Dispositif selon la revendication 4, **caractérisé en ce que**, dans un plan arbitraire qui contient l'axe central (C - C), la surface conique crée un angle (α) avec l'axe central (C - C), et **en ce que** l'angle se trouve compris dans l'intervalle 2°≤ α ≤ 35°, de préférence dans l'intervalle 5° ≤ α ≤ 15°.

6. Dispositif selon la revendication 1, **caractérisé en ce que** l'écrou (3) a une extension/hauteur H dans le sens longitudinal de la tige (1), **en ce que** le filetage (5) de l'écrou (3) a un pas P, et **en ce que** l'extension HA ou HB des biseaux (9) dans le sens de la hauteur de l'écrou (3) est définie par la relation H ≥ HA (ou HB) + P.

7. Dispositif selon la revendication 3, **caractérisé en ce que** l'écrou (3) a une extension/hauteur H dans le sens longitudinal de la tige (1), **en ce que** le filetage (5) de l'écrou (3) a un pas P, et **en ce que** l'extension HA + HB des biseaux (9) dans le sens de la hauteur de l'écrou (3) est définie par la relation H ≥ HA + HB + P.
